(19) Europäisches Patentamt
European Patent Office
Office européen des brevets

(11) **EP 2 178 200 B1**

(12) **EUROPEAN PATENT SPECIFICATION**

(45) Date of publication and mention
of the grant of the patent:
**30.05.2012 Bulletin 2012/22**

(51) Int Cl.:
***H02M 7/49*** *(2007.01)*      ***H02M 7/483*** *(2007.01)*

(21) Application number: **08166568.9**

(22) Date of filing: **14.10.2008**

(54) **Voltage source converter with multi-level voltage output**

Spannungsquellenwandler mit mehrstufiger Spannungsausgabe

Convertisseur de source de tension doté d'une sortie de tension à plusieurs niveaux

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**21.04.2010 Bulletin 2010/16**

(73) Proprietor: **ABB Research Ltd.**
**8050 Zürich (CH)**

(72) Inventor: **Norrga, Staffan**
**118 28 STOCKHOLM (SE)**

(74) Representative: **Kock, Ina**
**ABB AB**
**Intellectual Property**
**Ingenjör Bååths Gata 11**
**721 83 Västerås (SE)**

(56) References cited:
**DE-A1- 10 103 031**

• YUAN X ET AL: "Evaluation of soft switching techniques for the neutral-point-clamped (NPC) inverter" POWER ELECTRONICS SPECIALISTS CONFERENCE, 1999. PESC 99. 30TH ANNUAL I EEE CHARLESTON, SC, USA 27 JUNE-1 JULY 1999, PISCATAWAY, NJ, USA,IEEE, US, vol. 2, 27 June 1999 (1999-06-27), pages 659-664, XP010346776 ISBN: 978-0-7803-5421-0
• JOSÉ RODRÍGUEZRODRIGUEZ ET AL: "Multilevel Inverters: A Survey of Topologies, Controls, and Applications" IEEE TRANSACTIONS ON INDUSTRIAL ELECTRONICS, IEEE SERVICE CENTER, PISCATAWAY, NJ, USA, vol. 49, no. 4, 1 August 2002 (2002-08-01), XP011073746 ISSN: 0278-0046
• MCMURRAY W: "Resonant snubbers with auxiliary switches" 19891001; 19891001 - 19891005, 1 October 1989 (1989-10-01), pages 289-834, XP010090830

**Description**

The invention is related to a power electronic converter, in particular voltage source converters with multi-level voltage output.

In the art, multilevel converters are known to be used in order to reduce harmonic distortion in the output of voltage source converters. A multilevel converter is a converter where the output voltage - or, in case of a multiphase converter, the voltages - can assume several discrete levels; as can be seen in DE10103031. It is also known that additional passive and/or active circuitry may be used in a voltage source converter to reduce switching stress and losses, as described in "Resonant snubbers with auxiliary switches" by W. McMurray, IEEE Transactions on Industry Applications, 1993, vol. 29, issue 2, pp. 355-362.

"Evaluation of Soft Switching Techniques for the Neutral-Point-Clamped (NPC) Inverter" by Xiaoming Yuan, Herbert Stemmler and Ivo Barbi, Power Electronics Specialists Conference, 1999, PESC 99, 30th Annual IEEE, Charleston, USA, 27 June 1999 - 01 July 1999 discusses the topological variants of the soft switching NFT inverter based on the resonant pole techniques.

"Multilevel Inverters: A Survey of Topologies, Controls, and Applications" by José Rodriguez, Jih-Sheng Lai and Fang Zheng Peng, IEEE Transactions on Industrial Electronics, IEEE Service Center, Piscataway, NJ, USA, vol. 49, no. 4, August 2002 describes Multilevel inverter technology topologies like diode-clamped inverter, capacitor-clamped inverter and cascaded multicell inverter in relation to high-power medium-voltage energy control. The document also mentions soft-switching in relation to these topologies.

It is an object of the invention to propose a power electronic converter that allows for both: a multilevel output as well as reduced switching stress.

The object is achieved by a device according to claim 1.

The device according to the invention comprises at least one phase leg with a first and a second variable voltage source connected in series between two DC terminals, where each of the voltage sources comprises at least a first and a second submodule in series-connection. Each submodule comprises a series-connection of two power electronic switches connected in parallel with at least one capacitor. In the first voltage source, the first and the second submodules are connected in the following way: the inner and one of the two outer connection points of the two power electronic switches of the first submodule are connected either to a first of the two DC terminals or to the second submodule; respectively, and the inner and one of the two outer connection points of the two power electronic switches of the second submodule are connected either to the inner connection point of the two voltage sources or to the first submodule, respectively. The term inner connection point can also be understood as the midpoint between the two respective elements of a series connection, and the term outer connection point refers to the outer terminals of the series connection.

In the second voltage source, the first and the second submodules are connected in the following way: the inner and one of the two outer connection points of the two power electronic switches of the first submodule are connected either to the inner connection point of the two voltage sources or to the second submodule, respectively, and the inner and one of the two outer connection points of the two power electronic switches of the second submodule are connected either to a second of the two DC terminals or to the first submodule, respectively.

According to the invention, each submodule comprises an auxiliary reactor. A first terminal of the auxiliary reactor is connected to the inner connection point of the two power electronic switches and a second terminal of the auxiliary reactor is connected via at least one auxiliary power electronic switch to a terminal of the at least one capacitor.

The advantages of the invention over existing solutions are two-fold. Firstly, the switching stress on the semiconductors of the power electronic switches is reduced due to the switchable auxiliary reactor. This leads to lower losses and allows for the use of power electronic switches without the capability for hard turn-off. Additionally, devices with considerably higher blocking voltage can be used than would be possible otherwise. Thereby the number of submodules needed per voltage source can be reduced, which in turn reduces the overall costs of the converter. Secondly, since the voltage slope during transitions on the output of the converter is reduced by the invention, the insulation stress on equipment connected to the converter is reduced.

In an embodiment of the invention, at least one of the submodules comprises exactly one capacitor. One auxiliary power electronic switch is used to connect the second terminal of the auxiliary reactor to a first terminal of the one capacitor and another auxiliary power electronic switch is used to connect the second terminal of the auxiliary reactor to the second terminal of the one capacitor.

In an embodiment of the invention, more than just two submodules are connected in series per voltage source. In this embodiment, the submodules between the first and second submodule are connected with the inner connection point of their series-connected two power electronic switches to a first neighbouring submodule and with one of the two outer connection points to another neighbouring submodule.

In a further embodiment, at least one of the submodules comprises two series-connected capacitors instead of just one capacitor, where the second terminal of the auxiliary reactor is connected via an anti-parallel connection of two auxiliary power electronic switches to the inner connection point of the two capacitors.

Other features and advantages of the present invention will become more apparent to a person skilled in the art from the following detailed description in conjunction with the appended drawings in which:

Fig. 1 shows a converter topology as is known from the art,

Fig. 2 shows the setup of the voltage sources in the phase legs of the converter of Fig. 1 as known from the art and

Fig. 3 shows four different embodiments of the submodules in a voltage source converter according to the invention.

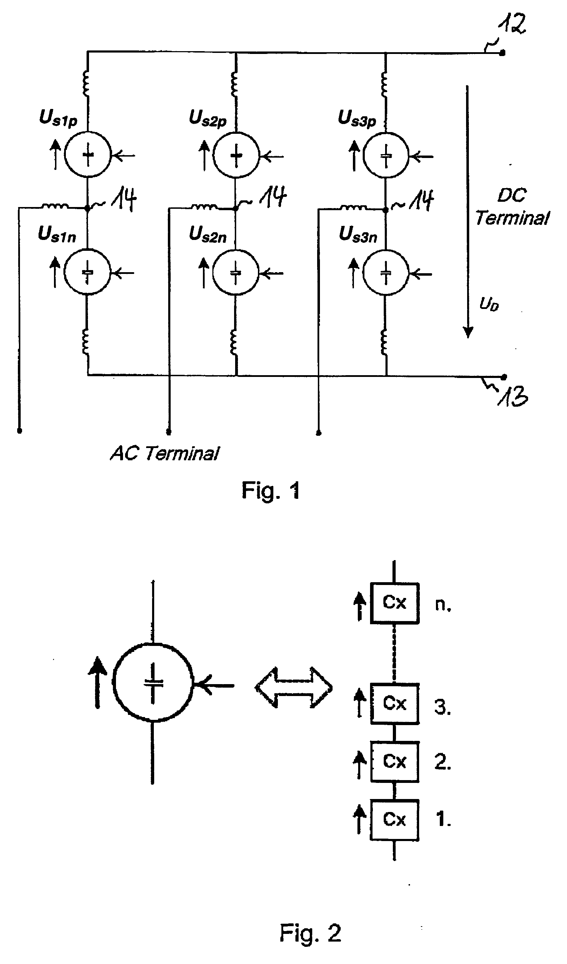

The device for converting a DC voltage into an AC voltage of variable amplitude and frequency or vice versa according to the invention can contain either a single phase leg or multiple phase legs, depending on how many phases the AC voltage has. Fig. 1 shows a three-phase converter. The three phase legs 1, 2 and 3 of the device of Fig. 1 comprise two variable and series-connected voltage sources $U_{sip}$ and $U_{sin}$ each, with i standing for the number of the corresponding phase leg. The midpoint or connection point between the voltage sources of each phase leg is each connected to an AC terminal. All the phase legs are connected in parallel to each other and to two DC terminals, where the DC voltage $U_D$ is applied to the DC terminals. By appropriately controlling the voltage sources of the phase legs over time, the AC to DC conversion is made. This can be done by making sure that the following equation is fulfilled over time:

$$\left\langle u_{s1p} + u_{s1n} \right\rangle = \left\langle u_{s2p} + u_{s2n} \right\rangle = \left\langle u_{s3p} + u_{s3n} \right\rangle = U_D,$$

with $U_D$ being the DC voltage amplitude, i being the number of the phase leg, $U_{sip}$ being the desired voltage of the upper voltage source in the corresponding phase leg and $U_{sin}$ being the desired voltage of the lower voltage source in the corresponding phase leg.

As is shown in Fig. 2, each voltage source is made up of a series connected string of n submodules Cx, with n being an integer equal to or larger than 2.

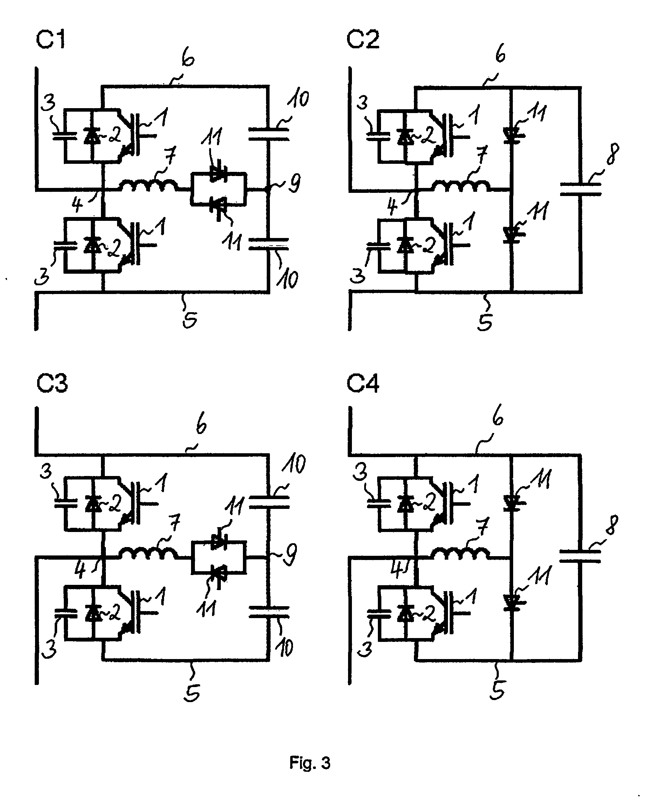

From Fig. 3, four different embodiments of the submodules Cx according to the invention can be seen, where x=1, 2, 3 or 4. Any combination of the submodules is possible within each voltage source. The submodules have the form of commutation cells, each cell comprising two main valves and a large DC capacitor holding the voltage $U_d$. The main valves are equipped with a power electronic switch 1 with turn-off capability, a free-wheeling diode 2 and a snubber capacitor 3 to allow for turn-off at low voltage slope. Depending on which of the two power electronic switches 1 is conducting, the corresponding submodule can assume one of two switching states, where in state 1 it applies zero voltage or in state 2 the capacitor voltage $U_d$ to the output. The output of the submodules is formed between the inner connection point 4 and one of the two outer connection points 5 or 6 of the two power electronic switches of the submodule. The outer connection points 5 and 6 are at the same time the two terminals of the one or two capacitors of the respective submodule. By an appropriate combination of submodule switching states, any voltage level of 0, $U_d$, $2 \cdot U_d$,.., $x \cdot U_d$ can be realized.

According to the invention, the submodules are additionally equipped with an auxiliary reactor 7 connected with one of its two terminals to the inner connection point of the two power electronic switches. The other terminal of the auxiliary reactor is via two auxiliary power electronic switches 11 connected either to the terminals of one capacitor 8, as is shown in the embodiments C2 and C4, or to the inner connection point 9 of two series-connected capacitors 10, as in the embodiments C1 and C3. In the latter case, the two auxiliary power switches 11 are connected anti-parallel to each other. The auxiliary power electronic switches 11 can be ordinary thyristors. The combination of an auxiliary reactor with two auxiliary power electronic switches is called auxiliary circuit in the following.

The commutation of the current between the main valves of a submodule, where the current in a phase leg is called load current, works as follows: Commutation from a free-wheeling diode 2 to the corresponding power electronic switch 1, so called diode-to-switch commutation, is made by activating the auxiliary circuit by gating on one of the thyristors 11. Thereby, the load current is firstly transferred to the auxiliary circuit. When the conducting main diode 2 thus turns off, a resonant process involving the auxiliary reactors 7 and the snubber capacitors 3 takes place which recharges the snubber capacitors 3. Subsequently, the voltage across the incoming valve, i.e. the valve to-be-turned-on, has fallen to zero and the power electronic switch 1 may be turned on at zero voltage and zero current conditions. Finally, the load current is transferred from the auxiliary circuit to this switch 1.

Commutation of the load current from a switch 1 to a diode 2 may be effected in two ways. Either the outgoing switch 1, i.e. the switch to-be-turned-off, is simply turned off whereby the load current recharges the snubber capacitors 3 and the incoming diode 2 eventually takes over the current. The other way implies that the auxiliary circuit is activated at the same time as the outgoing switch 1 is turned off, whereby a resonant current helps recharging the snubber capacitors 3. A combination of the two methods is also possible.

**Claims**

1.  Device for converting a DC voltage into an AC voltage of variable amplitude and frequency and vice versa comprising at least one phase leg with a first ($u_{sip}$) and a second ($u_{sin}$) variable voltage source connected in series between two DC terminals (12, 13), where each of the voltage sources ($u_{sip}$, $u_{sin}$) comprises at least a first and a second submodule (Cx) in series-connection, each submodule (Cx) comprising a series-connection of two power electronic switches (1) connected in parallel with at least one capacitor (8; 10) and being configured to assume one of two switching states,
    where in the first voltage source ($u_{sip}$):

    - the inner (4) and one of the two outer (5, 6) connection points of the two power electronic switches (1) of the first submodule are connected either to a first (12) of the two DC terminals or to the second submodule, respectively, and
    - the inner (4) and one of the two outer (5, 6) connection points of the two power electronic switches of the second submodule are connected either to the inner connection point (14) of the two voltage sources ($u_{sip}$, $u_{sin}$) or to the first submodule, respectively, and where in the second voltage source ($u_{sin}$):
    - the inner (4) and one of the two outer (5, 6) connection points of the two power electronic switches (1) of the first submodule are connected either to the inner connection point (14) of the two voltage sources ($u_{sip}$, $u_{sin}$) or to the second submodule, respectively,
    - the inner (4) and one of the two outer (5, 6) connection points of the two power electronic switches of the second submodule are connected either to a second (13) of the two DC terminals or to the first submodule, respectively, and
    - where the midpoint (14) between the two voltage sources is connected to an ac terminal, **characterised in that** in each submodule (Cx) a first terminal of an auxiliary reactor (7) is connected to the inner connection point (4) of the two power electronic switches (1) and a second terminal of the auxiliary reactor (7) is connected via at least one auxiliary power electronic switch (11) to a terminal (5, 6, 9) of the at least one capacitor (8; 10).

2.  Device according to claim 1, where at least one of the submodules comprises just one capacitor (8) and two auxiliary power electronic switches (11), where one auxiliary power electronic switch (11) is used to connect the second terminal of the auxiliary reactor (7) to a first terminal (5) of the one capacitor and the other auxiliary power electronic switch (11) is used to connect the second terminal of the auxiliary reactor (7) to the second terminal (6) of the one capacitor (8).

3.  Device according to claims 1 or 2, where each voltage source comprises more than just two submodules (Cx) connected in series and where the submodules between the first and second submodule are connected with the inner connection point (4) of their series-connected two power electronic switches (1) to a first neighbouring submodule and with one of the two (5, 6) outer connection points of their series-connected two power electronic switches (1) to a second neighbouring submodule.

4.  Device according to any of claims 1 to 3, where at least one of the submodules comprises two series-connected capacitors (10) and where the second terminal of the auxiliary reactor (7) is connected via an anti-parallel connection of two auxiliary power electronic switches (11) to the inner connection point (9) of the two capacitors (10).


**Patentansprüche**

1.  Vorrichtung zum Umformen einer Gleichspannung in eine Wechselspannung mit variabler Amplitude und Frequenz und umgekehrt, die mindestens einen Phasenstrang mit einer ersten ($u_{sip}$) und einer zweiten ($u_{sin}$) variablen Spannungsquelle umfasst, die in Reihe zwischen zwei Gleichstromanschlüssen (12, 13) geschaltet sind, wobei jede der Spannungsquellen ($u_{sip}$, $u_{sin}$) eine erste und eine zweite Unterbaugruppe (Cx) in Reihenschaltung umfasst, wobei jede Unterbaugruppe (Cx) eine Reihenschaltung von zwei elektronischen Leistungsschaltern (1) umfasst, die parallel mit mindestens einem Kondensator (8; 10) geschaltet und eingerichtet sind, einen von zwei Schaltzuständen anzunehmen,
    wobei in der ersten Spannungsquelle ($u_{sip}$):

    - der innere (4) und einer der zwei äußeren (5, 6) Anschlusspunkte der zwei elektronischen Leistungsschalter (1) der ersten Unterbaugruppe entweder an einen ersten (12) der zwei Gleichstromanschlüsse oder entsprechend an die zweite Unterbaugruppe angeschlossen sind und

- der innere (4) und einer der zwei äußeren (5, 6) Anschlusspunkte der zwei elektronischen Leistungsschalter der zweiten Unterbaugruppe entweder an den inneren Anschlusspunkt (14) der zwei Spannungsquellen (u<sub>sip</sub>, u<sub>sin</sub>) oder entsprechend an die erste Unterbaugruppe angeschlossen sind und

wobei in der zweiten Spannungsquelle (u<sub>sin</sub>):

- der innere (4) und einer der zwei äußeren (5, 6) Anschlusspunkte der zwei elektronischen Leistungsschalter (1) der ersten Unterbaugruppe entweder an den inneren Anschlusspunkt (14) der zwei Spannungsquellen (u<sub>sip</sub>, u<sub>sin</sub>) oder entsprechend an die zweite Unterbaugruppe angeschlossen sind und
- der innere (4) und einer der zwei äußeren (5, 6) Anschlusspunkte der zwei elektronischen Leistungsschalter der zweiten Unterbaugruppe entweder an einen zweiten (13) der zwei Gleichstromanschlüsse oder entsprechend an die erste Unterbaugruppe angeschlossen sind und
- wobei der Mittelpunkt (14) zwischen den zwei Spannungsquellen an einen Wechselstromanschluss angeschlossen ist,

**dadurch gekennzeichnet, dass** in jeder Unterbaugruppe (Cx) ein erster Anschluss eines Hilfsreaktors (7) an den inneren Anschlusspunkt (4) der zwei elektronischen Leistungsschalter (1) angeschlossen ist und ein zweiter Anschluss des Hilfsreaktors (7) über mindestens einen elektronischen Hilfsleistungsschalter (11) an einen Anschluss (5, 6, 9) des mindestens einen Kondensators (8; 10) angeschlossen ist.

**2.** Vorrichtung nach Anspruch 1, wobei mindestens eine der Unterbaugruppen genau einen Kondensator (8) und zwei elektronische Hilfsleistungsschalter (11) umfasst, wobei der eine elektronische Hilfsleistungsschalter (11) verwendet wird, den zweiten Anschluss des Hilfsreaktors (7) an einen ersten Anschluss (5) des einen Kondensators anzuschließen, und der andere elektronische Hilfsleistungsschalter (11) verwendet wird, den zweiten Anschluss des Hilfsreaktors (7) an den zweiten Anschluss (6) des einen Kondensators (8) anzuschließen.

**3.** Vorrichtung nach Anspruch 1 oder 2, wobei jede Spannungsquelle mehr als genau zwei Unterbaugruppen (Cx) umfasst, die in Reihe geschaltet sind, und wobei die Unterbaugruppen zwischen der ersten und zweiten Unterbaugruppe mit dem inneren Anschlusspunkt (4) ihrer in Reihe geschalteten zwei elektronischen Leistungsschalter (1) an eine erste benachbarte Unterbaugruppe und mit einem der zwei äußeren Anschlusspunkte (5, 6) ihrer in Reihe geschalteten zwei elektronischen Leistungsschalter (1) an eine zweite benachbarte Unterbaugruppe angeschlossen sind.

**4.** Vorrichtung nach einem der Ansprüche 1 bis 3, wobei mindestens eine der Unterbaugruppen zwei in Reihe geschaltete Kondensatoren (10) umfasst und wobei der zweite Anschluss des Hilfsreaktors (7) über eine Antiparallelschaltung der zwei elektronischen Hilfsleistungsschalter (11) an den inneren Anschlusspunkt (9) der zwei Kondensatoren (10) angeschlossen ist.

**Revendications**

**1.** Dispositif permettant de convertir une tension continue en une tension alternative d'amplitude et de fréquence variables et vice versa comprenant au moins une colonne de phase avec une première (u<sub>sip</sub>) et une deuxième (u<sub>sin</sub>) source de tension variable connectées en série entre deux bornes de courant continu (12, 13), où chacune des sources de tension (u<sub>sip</sub>, u<sub>sin</sub>) comprend au moins un premier et un deuxième sous-module (Cx) montés en série, chaque sous-module (Cx) comprenant un montage en série de deux interrupteurs électroniques de puissance (1) connectés en parallèle à au moins un condensateur (8 ; 10) et configurés pour prendre un état parmi deux états de commutation, dans lequel, dans la première source de tension (u<sub>sip</sub>) :

- le point de connexion intérieur (4) et l'un des deux points de connexion extérieurs (5, 6) des deux interrupteurs électroniques de puissance (1) du premier sous-module sont connectés respectivement soit à une première (12) des deux bornes de courant continu, soit au deuxième sous-module, et
- le point de connexion intérieur (4) et l'un des deux points de connexion extérieurs (5, 6) des deux interrupteurs électroniques de puissance du deuxième sous-module sont connectés respectivement soit au point de connexion intérieur (14) des deux sources de tension (u<sub>sip</sub>, u<sub>sin</sub>), soit au premier sous-module, et où, dans la deuxième source de tension (u<sub>sin</sub>) :
- le point de connexion intérieur (4) et l'un des deux points de connexion extérieurs (5, 6) des deux interrupteurs électroniques de puissance (1) du premier sous-module sont connectés respectivement soit au point de connexion intérieur (14) des deux sources de tension (u$_{sip}$, u$_{sin}$), soit au deuxième sous-module,
- le point de connexion intérieur (4) et l'un des deux points de connexion extérieurs (5, 6) des deux interrupteurs électroniques de puissance du deuxième sous-module sont connectés respectivement soit à une deuxième (13) des deux bornes de courant continu, soit au premier sous-module, et
- où le point médian (14) entre les deux sources de tension est connecté à une borne de courant alternatif,

**caractérisé en ce que**, dans chaque sous-module (Cx), une première borne d'un réacteur auxiliaire (7) est connectée au point de connexion intérieur (4) des deux interrupteurs électroniques de puissance (1) et une deuxième borne du réacteur auxiliaire (7) est connectée, via au moins un interrupteur électronique de puissance auxiliaire (11), à une borne (5, 6, 9) dudit au moins un condensateur (8 ; 10).

2.  Dispositif selon la revendication 1, dans lequel au moins l'un des sous-modules comprend un seul condensateur (8) et deux interrupteurs électroniques de puissance auxiliaires (11), où un interrupteur électronique de puissance auxiliaire (11) est utilisé pour connecter la deuxième borne du réacteur auxiliaire (7) à une première borne (5) du condensateur et l'autre interrupteur électronique de puissance auxiliaire (11) est utilisé pour connecter la deuxième borne du réacteur auxiliaire (7) à la deuxième borne (6) du condensateur (8).

3.  Dispositif selon la revendication 1 ou 2, dans lequel chaque source de tension comprend plus de deux sous-modules (Cx) montés en série et dans lequel les sous-modules situés entre les premier et deuxième sous-modules sont connectés avec le point de connexion intérieur (4) de leurs deux interrupteurs électroniques de puissance montés en série (1) à un premier sous-module voisin et avec l'un des deux (5, 6) points de connexion extérieurs de leurs deux interrupteurs électroniques de puissance montés en série (1) à un deuxième sous-module voisin.

4.  Dispositif selon l'une quelconque des revendications 1 à 3, dans lequel au moins l'un des sous-modules comprend deux condensateurs montés en série (10) et dans lequel la deuxième borne du réacteur auxiliaire (7) est connectée, via une connexion anti parallèle de deux interrupteurs électroniques de puissance auxiliaires (11), au point de connexion intérieur (9) des deux condensateurs (10).

$U_{s1p}$

$U_{s2p}$

$U_{s3p}$

$U_{s1n}$

$U_{s2n}$

$U_{s3n}$

DC Terminal

$U_D$

AC Terminal

Fig. 1

Cx    n.

Cx    3.

Cx    2.

Cx    1.

Fig. 2

7

Fig. 3

8

## REFERENCES CITED IN THE DESCRIPTION

**Patent documents cited in the description**

- DE 10103031

**Non-patent literature cited in the description**

- **W. McMurray.** Resonant snubbers with auxiliary switches. *IEEE Transactions on Industry Applications,* 1993, vol. 29 (2), 355-362
- **Xiaoming Yuan.** Evaluation of Soft Switching Techniques for the Neutral-Point-Clamped (NPC) Inverter. *Herbert Stemmler and Ivo Barbi, Power Electronics Specialists Conference,* 27 June 1999
- **José Rodriguez ; Jih-Sheng Lai ; Fang Zheng Peng.** Multilevel Inverters: A Survey of Topologies, Controls, and Applications. *IEEE Transactions on Industrial Electronics, IEEE Service Center,* August 2002, vol. 49 (4